# EUROPÄISCHE PATENTSCHRIFT

(11) **EP 2 158 047 B1**
(45) Veröffentlichungstag und Bekanntmachung des Hinweises auf die Patenterteilung: **15.08.2012**
(21) Anmeldenummer: 08759199.6
(22) Anmeldetag: 12.06.2008
(51) Int. Cl.: B21B 27/03

(54) **MEHRTEILIGE WALZE**
MULTIPART ROLLER
CYLINDRE EN PLUSIEURS PARTIES

(30) Priorität: 14.06.2007 DE 102007027439; 10.06.2008 DE 102008027494
(43) Veröffentlichungstag der Anmeldung: 03.03.2010
(73) Patentinhaber: SMS Siemag AG, 40237 Düsseldorf (DE)
(72) Erfinder: LINDNER, Florian, 57250 Netphen (DE); MÜNKER, Jochen, 57223 Kreuztal (DE); JEPSEN, Olaf, Norman, 57072 Siegen (DE); RAINER, Peter, 57271 Hilchenbach (DE)
(74) Vertreter: Klüppel, Walter
(86) Internationale Anmeldenummer: PCT/EP2008/004694
(87) Internationale Veröffentlichungsnummer: WO 2008/151795

(56) Entgegenhaltungen:
- WO-A-2007/006467
- DE-A1- 4 111 852
- JP-A- 60 115 308
- US-A- 4 416 137

## Beschreibung

Die Erfindung betrifft eine Walze, insbesondere Arbeits- oder Stützwalze, für ein Walzwerk, wie Grobblechwalzwerk, Flachwalzwerk oder dergleichen; mit einer Hülse, einem linken Halbzapfen und einem rechten Halbzapfen.

Aus der EP 1 056 553 B1 ist ein Walzwerk bekannt, mit Arbeitswalzen und mehrteiligen Stützwalzen, bestehend aus einem Grundkörper mit mehreren darauf in dessen Längsrichtung nebeneinander angeordneten Wälzlagern, die mit ihren Außenringen eine die Wälzlager umgreifende Hülse drehbar abstützen. Die Hülse liegt mit ihrer Innenoberfläche allseitig an den Außenoberflächen der Außenringe der Wälzlager an. Die Außenoberfläche bildet den Walzballen der. Stützwalze, wobei auf der Länge des Grundkörpers drei Wälzlager vorgesehen sind, von denen das mittlere Wälzlager als Kegelrollenlager ausgebildet ist. Die beiden äußeren Wälzlager sind als Zylinderrollenlager ausgebildet und zwischen den beiden Zylinderrollenlagem und dem Grundkörper ist je eine motorisch um die Längsachse des Grundkörpers verdrehbare Exzenterbüchse angeordnet, wobei im Lastbereich des Grundkörpers zwischen diesem und der Exzenterbüchse je ein die Schiefstellung des Zylinderrollenlagers ermöglichendes Kippsegment vorgesehen ist.

Eine mehrteilige Walze ist weiterhin in der US 4,407,151 offenbart.

Die WO 2007 / 006 467 A1 als nächster Stand der Technik offenbart eine Stützwalze für ein Walzwerk, wie Grobblechwalzwerk, Flachwalzwerk oder dergleichen, bestehend aus einer Hülse und einer Walzenwelle bzw. Walzenachse, wobei die Walzenwelle bzw. Walzenachse mehrteilig ausgebildet ist, insbesondere ist die Walzenwelle bzw. Walzenachse aus einem linken Halbzapfen und einem rechten Halbzapfen ausgebildet. Das Verfahren zur Herstellung einer derartigen Walze sieht vor, dass die Hülse Innen angewärmt wird und sich somit ausdehnt. Anschließend werden die Halbzapfen in die Hülse eingesetzt und an die rechte und die linke Stirnwand der Hülse geschoben. Zur genauen Positionierung weisen die Halbzapfen beispielsweise mindestens eine Anlagekante auf ihrem Umfang auf. Die Stützwalze, bestehend aus Hülse, rechtem Halbzapfen und linkem Halbzapfen, wird nach dem Erkalten der Hülse durch eine Schrumpfverbindung zusammengehalten. Es liegt eine biegesteife Stützwalze vor.
Bei diesem Herstellungsverfahren können nach dem Erkalten in der Verbindung Schrumpfspannungen verbleiben, die sich auch noch während des eigentlichen Walzvorganges lösen könne. Das kann dazu führen, dass sich die Walze nach dem ersten Walzen bleibend verformt. Dabei entstehende Planlauffehler können bis zu einem Millimeter betragen. Der entstandene Planlauffehler wird beispielsweise durch ein Überschleifen eliminiert. Durch eine hohe Walzkraft, die in anderer Phasenlage auf die Walze einwirkt, erfolgt eine weitere Verformung in die neue Richtung.

Der Erfindung liegt daher die Aufgabe zugrunde, eine Walze und ein Verfahren zur Herstellung der Walze anzugeben, bei der bzw. bei dem Schrumpfspannungen vermieden werden.

Diese Aufgabe wird erfindungsgemäß dadurch gelöst, dass bei einer Walze, insbesondere Arbeits- oder Stützwalze, für ein Walzwerk, wie Grobblechwalzwerk, Flachwalzwerk oder dergleichen; mit
- einer Hülse;
- einem linken Halbzapfen; und
- einem rechten Halbzapfen;
- wobei die Halbzapfen in dem Bereich, der von der Hülse umgeben wird, kegelstumpfförmig ausgebildet sind und auf dem linken Halbzapfen eine linke Oberfläche und auf dem rechten Halbzapfen eine rechte Oberfläche ausbilden, der linke Halbzapfen und der rechte Halbzapfen mit Bohrungen und damit korrespondierenden Nuten ausgebildet ist, wobei die Nuten auf den Oberflächen ausgebildet sind.

Eine Ausgestaltung der Erfindung sieht vor, dass die Nuten umlaufend ausgebildet sind. Hierdurch wird ein gleichmäßiger Druck über den gesamten Umfang erreicht, der die Hülse in alle Richtungen gleichmäßig aufweitet.

Weitere Ausgestaltungen der Walze ergeben sich aus den diesbezüglichen Unteransprüchen.

Die Erfindung betrifft außerdem ein Verfahren zum Herstellen einer Walze, insbesondere einer Arbeits- oder Stützwalze, wobei
- der linke Halbzapfen und der rechte Halbzapfen in die Hülse eingesetzt werden;
- der rechte Halbzapfen und der linke Halbzapfen durch mindestens einen Zuganker miteinander verspannt werden;
- ein Drucköl in Bohrungen und Nuten in bzw. auf den linken Halbzapfen und den rechten Halbzapfen geleitet werden;
- das Drucköl einen Druck auf die Hülse ausübt, durch den die Hülse aufgeweitet wird; und
- dass bei aufgeweiteter Hülse mittels des Zugankers die Anschlagflächen mit den Stirnflächen der Hülse aufeinander gepresst werden.

Durch das Aufweiten der Hülse mittels des Drücköls wird eine Verformung ermöglicht, die keine Schrumpfspannungen aufweist, wie sie bei einer Erwärmung auftreten. Die im elastischen Bereich der Hülse vorgenommene Aufweitung bewirkt, dass die Hülse nach dem Abstellen des Überdruckes in ihre Ausgangsform zurückgeht.

Weitere Ausgestaltungen des Verfahrens ergeben sich aus den diesbezüglichen Unteransprüchen.

Die Walze mit Hülse, linkem Halbzapfen und rechten Halbzapfen ist mit Dichtungen ausgebildet, um das Eindringen von beispielsweise Schmutzpartikel und Flüssigkeiten wie Wasser, Kühlmittel, Schmiermittel zu verhindern und somit Korrosion (Tribokorrosion) zu vermeiden.

Ein Ausführungsbeispiel der Erfindung wird anhand einer sehr schematischen Zeichnung näher beschrieben. Es zeigt:
- Fig. 1: in räumlicher Darstellung im Zusammenbau eine Walze mit einer Hülse, einem linken Halbzapfen und einem rechten Halbzapfen;
- Fig. 2: als Explosionszeichnung die Walze aus Figur 1;
- Fig. 3: in geschnittener Seitenansicht die Walze aus Figur 1;
- Fig. 4: im Detail die Position Y; und
- Fig. 5: im Detail die Position X

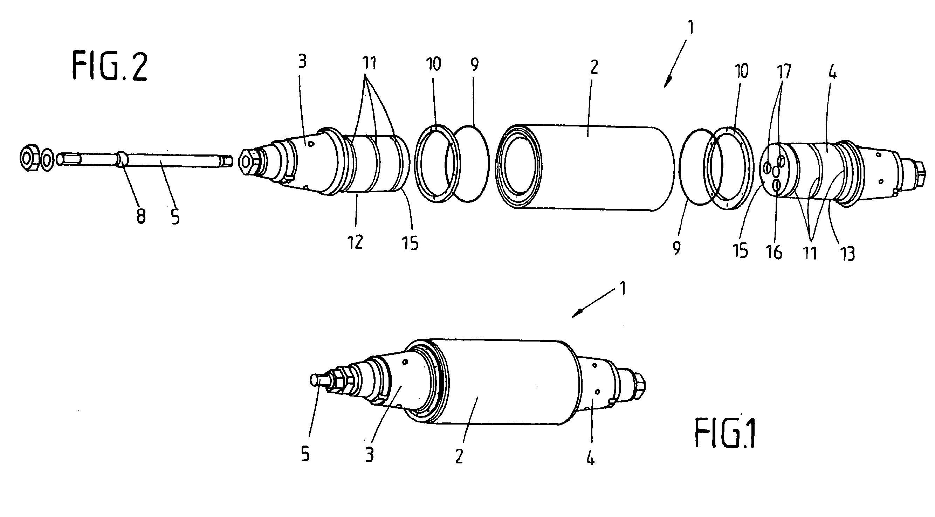

In Figur 1 ist in räumlicher Darstellung im Zusammenbau eine Walze 1 mit einer Hülse 2, einem linken Halbzapfen 3 und einem rechten Halbzapfen 4 dargestellt, die mittels eines Zugankers 5 verspannt werden.

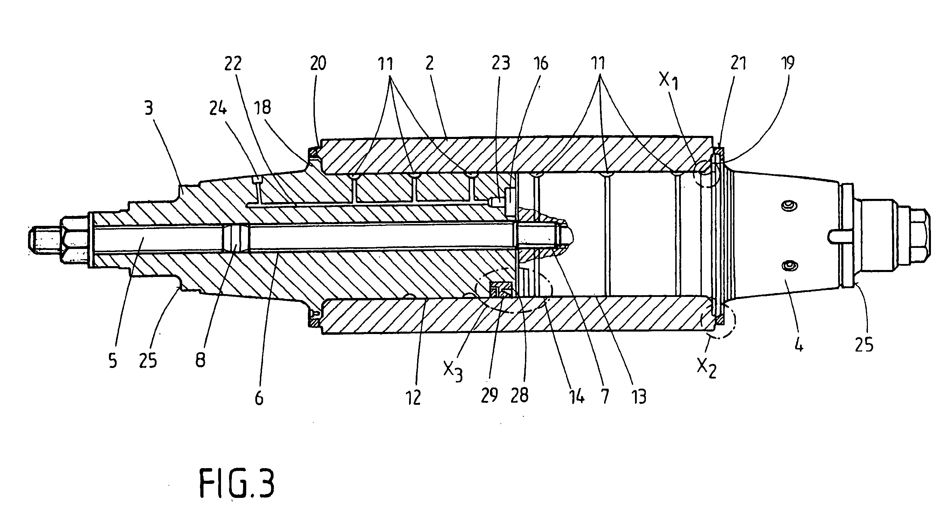

Figur 2 zeigt als Explosionszeichnung die Walze 1 aus Figur 1 mit weiteren Elementen. In der gezeigten Darstellung ist der linke Halbzapfen 3 mit einer Durchgangsbohrung 6 (siehe Figur 3) ausgebildet, durch die der Zuganker 5 geführt und anschließend in eine Gewindebohrung 7 (siehe Figur 3) des rechten Halbzapfens 4 geschraubt wird. Auf dem Zuganker 5 ist optional mindestens eine lokale Verdickung 8 ausgebildet, damit der Zuganker 5 in der Durchgangsbohrung 6 geführt wird und nicht schlagen kann. Die Verdickung 8 kann auch als separates Teil bzw. separate Teile aufgeschoben werden. Die Verdickung 8 kann auch genutzt werden, um darin eine Dichtung unterzubringen. Dieses ermöglicht bei der Demontage innen eine auseinander treibende Druckkraft aufzubauen. Der Zuganker 5 weist an der einen Seite ein Gewinde entsprechend der Gewindebohrung 7 und an der anderen Seite ein Gewinde mit Mutter und optionaler Unterlegscheibe auf. Alternativ kann anstelle der Mutter die Zugstange 5 als Schraube ausgebildet sein. Die Walze 1 ist weiterhin mit Dichtungen 9 und Dichtungsträgern 10 ausgebildet, die ein Ein- bzw. Austreten von Schmutz und Flüssigkeiten verhindern.
Der linke Halbzapfen 3 und der rechte Halbzapfen 4 weisen an den Oberflächen 12 und 13, die mit der inneren Oberfläche 14 der Hülse 2 in Kontakt kommen, jeweils mindestens eine Nut 11 auf, durch die ein Drucköl geleitet wird. Die Zuführung des Drucköls im linken Halbzapfen 3 und im rechten Halbzapfen 4 erfolgt über entsprechende Anschlüsse (siehe Figur 3).
Die gegenüberliegenden Stimflächen 15 des linken Halbzapfens 3 und des rechten Halbzapfens 4 weisen in einer Ausgestaltung Ausnehmungen 16 für Stopfen (siehe Figur 3) und/oder gegenüberliegende Bohrungen 17 auf, durch die eine Drehsicherung zwischen den beiden Halbzapfen 3 und 4 mittels eingebrachter Bolzen (nicht dargestellt) erreicht wird.

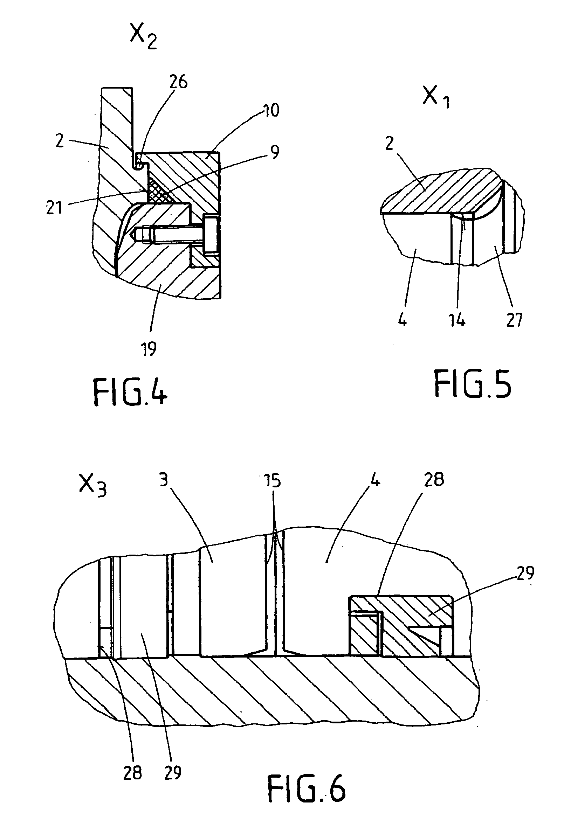

In geschnittener Seitenansicht ist in Figur 3 die Walze 1 dargestellt. Sowohl der linke Halbzapfen 3 als auch der rechte Halbzapfen 4 weisen Anschlagflächen 18 und 19 auf, die in Kontakt mit der linken Stirnfläche 20 und der rechten Stirnfläche 21 der Hülse 2 stehen. Die Anschlagflächen 18 und 19 sind optional mit Dichtungsträger 10 und Dichtungen 9 ausgebildet, die das Ein- und Austreten von Schmutz und Flüssigkeiten in bzw. aus der Walze verhindern. Entsprechende Details sind in den Figuren 4 und 5 dargestellt.
Zum Zusammenfügen der Walze 1 werde der linke Halbzapfen 3 und der rechte Halbzapfen 4 in die Hülse 2 geschoben und durch den Zuganker 5 verspannt. Auf den Zuganker 5 wird ein hydraulisches Vorspanngerät (nicht dargestellt) aufgesetzt, mit dem der linke Halbzapfen 3 und der rechte Halbzapfen 4 innerhalb der Hülse 2 zueinander gezogen werden. Der Fügevorgang wird dadurch verbessert, indem, die Hülse 2 mittels Drucköl aufgeweitet wird, bis die Stirnfläche 20 mit der Anschlagfläche 18 und die Stirnfläche 21 mit der Anschlagfläche 19 in Kontakt kommen. Anschließend wird das Drucköl entlastet und die Hülse 2 ist mit dem linken Halbzapfen 3 und dem rechten Halbzapfen 4 im Presssitz verbunden.
Zum Austauschen oder zum separaten Nachschleifen der Hülse 2 wird die Walze 1 demontiert. Hierzu wird die Hülse 2 durch das Drucköl ebenfalls aufgeweitet und der linke Halbzapfen 3 und der rechte Halbzapfen 4 werden aus der Hülse 2 gezogen bzw. der Presssitz wird aufgehoben. Um die Hülse 2 aufzuweiten wird das Drucköl durch Bohrungen 22 in den Halbzapfen 3, 4 zu den Nuten 11 geführt. Die vorzugsweise umlaufenden Nuten 11 nehmen das Drucköl auf. Wird das Drucköl mittels geeigneter Vorrichtungen in die Bohrungen 22 und die Nuten 11 gedrückt, wird der Druck auf die innere Oberfläche 14 der Hülse 2 übertragen und die Hülse 2 wird aufgeweitet. Bei Montage werden mittels des Zugankers 5 und/oder des Vorspanngerätes der linke Halbzapfen 3 und der rechte Halbzapfen 4 aufeinander zu gezogen, bis die Hülse 2 durch die Anschlagflächen 18, 19 genau positioniert wird.
Der linke Halbzapfen 3 und der rechte Halbzapfen 4 sind zum Fügen als Kegel ausgebildet. Die Hülse 2 weist im Inneren einen entsprechenden Gegenkegel auf. Hierzu wird bei den Bauteilen ein flacher Kegel mit einer Kegelverjüngung von 1:15 bis 1:100 berücksichtigt. Der Kegel ist in einstufig oder mehrstufig (getreppt bzw. in Form einer Treppe) in konischer oder zylindrischer Form ausgebildet.
Für die Zuführung des Drucköls ist jeweils mindestens eine Bohrung 22 in den
Halbzapfen 3, 4 ausgebildet. Die achsparallel angeordneten Bohrungen 22 werden an einem Ende im Bereich der Stimflächen 15 durch Stopfen 23 verschlossen. An dem anderen Ende befindet sich ein Anschluss 24 für ein Druckölgerät (nicht dargestellt) mit dem das Drucköl in die Bohrung 22 und die Nuten 11 gelangt sowie der Druck aufgebaut wird. Der Anschluss 24 erfolgt alternativ an der äußeren Stirnseite 25 Halbzapfens 3, 4 und/oder an den zylindrischen Außenflächen der Anschlagflächen 18 und 19.
Der linke Halbzapfen 3 und der rechte Halbzapfen 4 sind im Bereich der Stimflächen 15 mit einer umlaufenden Dichtungsnut 28 und darin eingefügter Dichtung 29 ausgebildet. Hierdurch wird die Kantenpressung bei nur einseitig aufgeweiteter Hülse 2 derart unterstützt, dass beim Einfügen nur eines Halbzapfens 3 oder 4 das Drucköl nicht abfließen kann.

Spezielle Ausgestaltungen der Walze 1 sind im Detail in Figur 4 (Position X2), in Figur 5 (Position X1) und in Figur 6 (Position X3) dargestellt.

In Figur 4 ist, in Vergrößerung, der Dichtungsträger 10 mit der Dichtung 9 dargestellt. Der Dichtungsträger 10 wird mittels Schrauben an der Anschlagfläche 19 befestigt, wobei eine Dichtung 9 gegen die rechte Stirnfläche 21 der Hülse 2 gedrückt wird. Die rechte Stirnfläche 21 der Hülse 2 ist weiterhin mit einer Wasserablaufnut 26 ausgebildet.

In Figur 5 ist, in Vergrößerung, ein Freistich 27 im Übergang von der Anschlagfläche 19 zum Kegel des rechten Halbzapfens 4 dargestellt. Dabei ist die innere Oberfläche 14 der Hülse 2 so ausgebildet, dass die innere Oberfläche 14 im Freistich 27 endet. Der in den Freistich 27 ragende Überstand reduziert die Relativbewegung in diesem Bereich.

In Figur 6 ist, in Vergrößerung, der linke Halbzapfen 3 und der rechte Halbzapfen 4 mit den jeweiligen Stirnflächen 15 dargestellt. Im Bereich der Stirnfläche 15 ist der linke Halbzapfen 3 und/oder der rechte Halbzapfen 4 mit einer Dichtungsnut 28 zur Aufnahme einer Dichtung 29 ausgebildet ist. Die Form der Dichtungsnut 28 ist abhängig von der Form der Dichtung 29. Als Dichtung 29 können alle bekannten Dichtungen berücksichtigt werden. Diese Ausgestaltung wird dann berücksichtigt, wenn zuerst nur ein Halbzapfen 3 oder 4 montiert wird, um ein Ablaufen des Drucköls zu vermeiden.

### Bezugszeichenliste

- 1.: Walze
- 2.: Hülse
- 3.: linker Halbzapfen
- 4.: rechter Halbzapfen
- 5.: Zuganker
- 6.: Durchgangsbohrung
- 7.: Gewindebohrung
- 8.: Verdickung
- 9.: Dichtung
- 10.: Dichtungsträger
- 11.: Nut
- 12.: linke Oberfläche
- 13.: rechte Oberfläche
- 14.: Oberfläche
- 15.: Stirnflächen
- 16.: Ausnehmung
- 17.: Bohrung
- 18.: Anschlagfläche
- 19.: Anschlagfläche
- 20.: linke Stirnfläche
- 21.: rechte Stirnfläche
- 22.: Bohrung
- 23.: Stopfen
- 24.: Anschluss
- 25.: Stirnfläche
- 26.: Wasserablaufnut
- 27.: Freistich
- 28.: Dichtungsnut
- 29.: Dichtung

## Patentansprüche

1. Walze (1), insbesondere Arbeits- oder Stützwalze, für ein Walzwerk, wie Grobblechwalzwerk, Flachwalzwerk oder dergleichen; mit
- einer Hülse (2);
- einem linken Halbzapfen (3); und
- einem rechten Halbzapfen (4);
- wobei die Halbzapfen (3, 4) in dem Bereich, der von der Hülse (2) umgeben wird, kegelstumpfförmig ausgebildet sind und auf dem linken Halbzapfen (3) eine linke Oberfläche (12) und auf dem rechten Halbzapfen (4) eine rechte Oberfläche (13) ausbilden,
**dadurch gekennzeichnet,**
**dass** der linke Halbzapfen (3) und der rechte Halbzapfen (4) mit Bohrungen (24) und damit korrespondierenden Nuten (11) ausgebildet ist, wobei die Nuten (11) auf den Oberflächen (12, 13) ausgebildet sind.

2. Walze (1) nach Anspruch 1,
**dadurch gekennzeichnet,**
**dass** die Nuten (11) umlaufend oder spiralförmig umlaufend ausgebildet sind.

3. Walze (1) nach Anspruch 2,
**dadurch gekennzeichnet,**
**dass** der linke Halbzapfen (3) und/oder der rechte Halbzapfen (4) mit mindesten einer, achsparallelen Durchgangsbohrung (6) ausgebildet ist.

4. Walze (1) nach Anspruch 2 oder 3,
**dadurch gekennzeichnet,**
**dass** der linke Halbzapfen (3) und/oder der rechte Halbzapfen (4) mit einer Gewindebohrung (7) ausgebildet ist.

5. Walze (1) nach Anspruch 2 oder 3,
**dadurch gekennzeichnet,**
**dass** der linke Halbzapfen (3) und/oder der rechte Halbzapfen (4) mit einer Dichtungsnut (28) zur Aufnahme einer Dichtung (29) ausgebildet ist.

6. Walze (1) nach einem der Ansprüche 1 bis 5,
**dadurch gekennzeichnet,**
**dass** die Hülse (2) Stirnseiten (20, 21) aufweist die mit einer Wasserablaufnut (26) ausgebildet sind.

7. Walze (1) nach einem der Ansprüche 1 bis 6,
**dadurch gekennzeichnet,**
**dass** die Hülse (2) Innen kegelstumpfförmig ausgebildet ist.

8. Walze (1) nach einem der Ansprüche 1 bis 7,
**dadurch gekennzeichnet,**
**dass** die Hülse (2) aus einem hochwertigen, gegossenen und / oder geschmiedeten Vergütungsstahl gebildet ist.

9. Walze (1) nach einem der Ansprüche 1 bis 8,
**dadurch gekennzeichnet,**
**dass** die Hülse (2) auf ihrer äußeren Umfangsfläche mit einer verschleißfesten Auftragsschweißung ausgebildet ist.

10. Verfahren zum Herstellen einer Walze (1), insbesondere einer Arbeitsoder Stützwalze, nach einem der Ansprüche 1 bis 9,
**dadurch gekennzeichnet, dass**
- der linke Halbzapfen (3) und der rechte Halbzapfen (4) in die Hülse (2) eingesetzt werden;
- der rechte Halbzapfen (3) und der linke Halbzapfen (4) durch mindestens einen Zuganker (5) miteinander verspannt werden;
- ein Drucköl in Bohrungen (22) und Nuten (11) in bzw. auf den linken Halbzapfen (3) und den rechten Halbzapfen (4) geleitet werden;
- das Drucköl einen Druck auf die Hülse (2) ausübt, durch den die Hülse (2) aufgeweitet wird; und
- dass bei aufgeweiteter Hülse (2) mittels des Zugankers (5) die Anschlagflächen (18, 19) mit den Stirnflächen (20, 21) der Hülse (2) aufeinander gepresst werden.

11. Verfahren nach Anspruch 10,
**dadurch gekennzeichnet,**
**dass** durch Umkehrung der Schritte aus Anspruch 11 eine Demontage der Walze erfolgt.

12. Verfahren nach Anspruch 10 oder 11,
**dadurch gekennzeichnet,**
**dass** der Zuganker (5) in eine Gewindebohrung (7), die in eine der beiden Halbzapfen (4, 5) eingebracht ist, geschraubt wird.

13. Verfahren nach einem der Ansprüche 10 bis 12,
**dadurch gekennzeichnet,**
**dass** die Außenfläche der Hülse (2) mit einer verschleißfesten Auftragsschweißung versehen wird.

## Claims

1. Roll (1), particularly working or backing roll, for a rolling mill, such as a heavy-plate rolling mill, flat rolling mill or the like, comprising
- a sleeve (2);
- a lefthand half pin (3); and
- a righthand half pin (4);
- wherein the half pins (3, 4) are formed to be frusto-conical in the region surrounded by the sleeve (2) and form a lefthand surface (12) on the lefthand half pin (3) and a righthand surface (13) of the righthand half pin (4),
**characterised in that** the lefthand half pin (3) and the righthand half pin (4) are formed with bores (24) and grooves (11) corresponding therewith, wherein the grooves (11) are formed on the surfaces (12, 13).

2. Roll (1) according to claim 1, **characterised in that** the grooves (11) are formed to be encircling or helically encircling.

3. Roll (1) according to claim 2, **characterised in that** the lefthand half pin (3) and/or the righthand half pin (4) is or are formed with at least one axially parallel passage bore (6).

4. Roll (1) according to claim 2 or 3, **characterised in that** the lefthand half pin (3) and/or the righthand half pin (4) is or are formed with a threaded bore (7).

5. Roll (1) according to claim 2 or 3, **characterised in that** the lefthand half pin (3) and/or the righthand half pin (4) is or are formed with a sealing groove (28) for receiving a seal (29).

6. Roll (1) according to any one of claims 1 to 5, **characterised in that** the sleeve (2) has end faces (20, 21) which are formed with a water drain groove (26).

7. Roll (1) according to any one of claims 1 to 6, **characterised in that** the sleeve (2) is formed to be internally frusto-conical.

8. Roll (1) according to any one of claims 1 to 7, **characterised in that** the sleeve (2) is formed from a high-quality cast and/or forged tempered steel.

9. Roll (1) according to any one of claims 1 to 8, **characterised in that** the sleeve (2) is formed on its outer circumferential surface with a wear-resistant weld build-up.

10. Method of producing a roll (1), particularly working or backing roll, according to any one of claims 1 to 9, **characterised in that**
- the lefthand half pin (3) and the righthand half pin (4) are inserted into the sleeve (2);
- the righthand half pin (3) and the lefthand half pin (4) are tightened together by at least one tie rod (5);
- a pressure oil is conducted in bores (22) and grooves (11) in or on the lefthand half pin (3) and the righthand half pin (4);
- the pressure oil exerts on the sleeve (2) a pressure by which the sleeve (2) is expanded; and
- with the sleeve (2) expanded, the abutment surfaces (18, 19) and the end surfaces (20, 21) of the sleeve (2) are pressed together by means of the tie rod (5).

11. Method according to claim 10, **characterised in that** demounting of the roll is carried out by a reversal of the steps of claim 10.

12. Method according to claim 10 or 11, **characterised in that** the tie rod (5) is screwed into a threaded bore (7) formed in one of the two half pins (3, 4).

13. Method according to any one of claims 10 to 12, **characterised in that** the outer surface of the sleeve (2) is provided with a wear-resistant weld build-up.

## Revendications

1. Cylindre (1), en particulier cylindre de travail ou cylindre de soutien pour un laminoir tel qu'un laminoir dégrossisseur, un laminoir à produits plats ou analogues, comprenant :
- un manchon (2) ;
- un demi-tourillon gauche (3) ; et
- un demi-tourillon droit (4) ;
- dans lequel les demi-tourillons (3, 4), dans la zone qui est entourée par le manchon (2), sont réalisés en forme de cône tronqué et forment, sur le demi-tourillon gauche (3), une surface gauche (12) et sur le demi-tourillon droit (4), une surface droite (13) ;
**caractérisé en ce que** le demi-tourillon gauche (3) et le demi-tourillon droit (4) sont réalisés avec des alésages (24) et avec des rainures (11) qui y correspondent, les rainures (11) étant réalisées sur les surfaces (12, 13).

2. Cylindre (1) selon la revendication 1, **caractérisé en ce que** les rainures (11) sont réalisées en périphérie ou en périphérie sous forme d'une spirale.

3. Cylindre (1) selon la revendication 2, **caractérisé en ce que** le demi-tourillon gauche (3) et/ou le demi-tourillon droit (4) est/sont réalisé (s) avec au moins un alésage de passage (6) parallèle à l'axe.

4. Cylindre (1) selon la revendication 2 ou 3, **caractérisé en ce que** le demi-tourillon gauche (3) et/ou le demi-tourillon droit (4) est/sont réalisé (s) avec un alésage taraudé (7).

5. Cylindre (1) selon la revendication 2 ou 3, **caractérisé en ce que** le demi-tourillon gauche (3) et/ou le demi-tourillon droit (4) est/sont réalisé(s) avec une rainure d'étanchéité (28) pour la réception d'un joint d'étanchéité (29).

6. Cylindre (1) selon l'une quelconque des revendications 1 à 5, **caractérisé en ce que** le manchon (2) présente des côtés frontaux (20, 21) qui sont réalisés avec une rainure (26) pour l'écoulement de l'eau.

7. Cylindre (1) selon l'une quelconque des revendications 1 à 6, **caractérisé en ce que** l'intérieur du manchon (2) est réalisé en forme de cône tronqué.

8. Cylindre (1) selon l'une quelconque des revendications 1 à 7, **caractérisé en ce que** le manchon (2) est formé à partir d'acier amélioré de haute qualité coulé et/ou forgé.

9. Cylindre (1) selon l'une quelconque des revendications 1 à 8, **caractérisé en ce que** le manchon (2) est réalisé sur sa surface périphérique externe avec une soudure d'application résistant à l'usure.

10. Procédé pour la fabrication d'un cylindre (1), en particulier d'un cylindre de travail ou de soutien selon l'une quelconque des revendications 1 à 9, **caractérisé en ce que** :
- on insère le demi-tourillon gauche (3) et le demi-tourillon droit (4) dans le manchon (2) ;
- on relie l'un à l'autre sous tension le demi-tourillon gauche (3) et le demi-tourillon droit (4) via au moins un tirant (5) ;
- on guide une huile hydraulique dans les alésages (22) et dans les rainures (11) dans, respectivement sur le demi-tourillon gauche (3) et le demi-tourillon droit (4) ;
- l'huile hydraulique exerce une pression sur le manchon (2) donnant lieu à un élargissement du manchon (2) ; et
- une fois que le manchon (2) a été élargi, on comprime l'une sur l'autre, au moyen du tirant (5), les surfaces de butée (18, 19) comprenant les faces frontales (20, 21) du manchon (2).

11. Procédé selon la revendication 10, **caractérisé en ce qu'**on procède à un démontage lorsqu'on franchit les étapes de la revendication 10 dans le sens inverse.

12. Procédé selon la revendication 10 ou 11, **caractérisé en ce qu'**on insère par vissage le tirant (5) dans un alésage taraudé (7) qui a été pratiqué dans un des deux demi-tourillons (4, 5).

13. Procédé selon l'une quelconque des revendications 10 à 12, **caractérisé en ce que** la face externe du manchon (2) est munie d'un apport de métal par soudure résistant à l'usure.
